# EUROPÄISCHE PATENTSCHRIFT

(11) **EP 1 273 634 B1**
(45) Veröffentlichungstag und Bekanntmachung des Hinweises auf die Patenterteilung: **03.08.2005**
(21) Anmeldenummer: 02011708.1
(22) Anmeldetag: 25.05.2002
(51) Int. Cl.: C09C 3/12, C09C 1/30, C08K 9/06

(54) **Silanmodifizierter oxidischer oder silikatischer Füllstoff, Verfahren zu dessen Herstellung und dessen Verwendung**
Silane-modified oxidic or silicate filler, method for its manufacture and its use
Charge de type oxyde ou silicate modifiée au silane, procédé de sa fabrication et son utilisation

(30) Priorität: 06.07.2001 DE 10132943
(43) Veröffentlichungstag der Anmeldung: 08.01.2003
(73) Patentinhaber: Degussa AG, 40474 Düsseldorf (DE)
(72) Erfinder: Luginsland, Hans-Detlef, Dr., 50968 K-ln (DE); Hasse, Andre, 52441 Linnich (DE); Korth, Karsten, Dr., 79639 Wyhlen (DE)

(56) Entgegenhaltungen:
- WO-A-01/12732
- US-A- 3 768 537
- US-A- 4 436 847
- US-B1- 6 455 613

## Beschreibung

Die Erfindung betrifft einen silanmodifizierten oxidischen oder silikatischen Füllstoff, ein Verfahren zu dessen Herstellung sowie dessen Verwendung.

Es ist bekannt, oxidische oder silikatische Verbindungen mit Organosiliziumverbindungen zu behandeln, um durch diese Behandlung den Verbund zwischen dem anorganischen Füllstoff und dem verwendeten organischen Polymeren in füllstoffverstärkten Elastomeren zu stärken und damit die Eigenschaften der Füllstoffe in den Polymeren zu verbessern.

Aus DE 2141159, DE 2212239, US 3,978,103 und US 4,048,206 ist bekannt, daß schwefelhaltige Organosiliziumverbindungen, wie Bis-(3-Triethoxysilylpropyl)tetrasulfan oder 3-Mercaptopropyltriethoxysilan, als Silanhaftvermittler oder Verstärkungsadditiv in oxidisch gefüllten Kautschukmischungen, unter anderem für Laufflächen und andere Teile von Autoreifen, eingesetzt werden. Die Verwendung von Mercaptosilanen in Kautschukmischungen für Reifenlaufflächen ist aus FR-A 152.094.859 bekannt. Um die erheblichen Probleme bei der Verarbeitung, wie zum Beispiel Pre-Scorch und Plastizitätsverhalten, von Mercaptosilanen zu umgehen, verwendet man als Kopplungsagenz für Reifenteile meist polysulfidische Organosilane, wie beispielsweise das Bis-(3-triethoxysilylpropyl)tetrasulfan oder das Bis-(3-triethoxysilylpropyl)disulfan (DE 2542534, DE2405758, DE19541404, DE19734295), die den besten Kompromiss für kieselsäuregefüllte Vulkanisate in Bezug auf Vulkanisationssicherheit, einfache Herstellung und Verstärkungsleistung bieten.

Die Einbringung der entsprechenden Additive, speziell der Organosilane und der unmodifizierten Füllstoffe in die unvulkanisierten Polymermischungen kann auf unterschiedlichen Wegen erfolgen. Das in-situ Verfahren beinhaltet einen gemeinsamen Mischvorgang von Füllstoffen, wie Ruß und Kieselsäure, Organosilanen und Polymer.

Das ex-situ Verfahren beinhaltet eine Modifikation des Füllstoffs mit dem entsprechenden Organosilan oder einer Mischung von verschiedenen Organosilanen, bevor der Füllstoff mit dem Polymer vermischt wird.

Es ist bekannt, daß durch Auflösen der Organosiliziumverbindung in einem organischen Lösungsmittel und anschließender Behandlung von Füllstoffen, zum Beispiel Clays, die Füllstoffoberfläche modifiziert werden kann (US PS-3 227 675).

Eine besonders große Rolle spielt heutzutage die Flüssigdosierung (US 3,997,356) oder auch die Dosierung des aktiven Füllstoffs über eine vorgebildete Mischung aus Organosilan und Füllstoff (DE 3314742, US A-4 076 550). Nachteile dieser thermisch nicht vorbehandelten Abmischungen ist die mangelnde Lagerstabilität und damit die mangelnde Eigenschaftsstabilität der Produkte.

Die US-PS 4,151,154 beschreibt oxidische silikatische Füllstoffe, deren Oberfläche einer Behandlung mit zwei unterschiedlichen Typen von Organosiliziumverbindungen ausgesetzt wird. Die oxidischen Teilchen werden dabei so behandelt, daß sie eine größere Affinität zu Wasser zeigen und sich auch leichter in wässrigen Systemen verteilen lassen.

Aus der US PS-35,67,680 ist die Modifizierung von in Wasser suspendiertem Kaolin mit verschiedenen Silanen bekannt. Die beschriebenen Organosiliziumverbindungen sind jedoch in den für die Modifizierung nötigen Mengen wasserlöslich, so daß in diesem Fall die Behandlung des Füllstoffes aus einer wässrigen Lösung heraus erfolgen kann.

Die FR-A-2295958 betrifft Arylpolysulfide und mit diesen Verbindungen behandelte mineralische Füllstoffe, die in Kautschukmischungen eingesetzt werden. Die Herstellung erfolgt in einer wässrig/alkoholischen Formulierung, die 99,9 bis 80 Gew.-% Alkohol enthält.

Ferner ist aus EP-PS 01 26 871 ein Verfahren bekannt, bei dem man die Oberfläche silikatischer Füllstoffe mit Hilfe einer wässrigen Emulsion von wasserunlöslichen Organosiliziumverbindungen modifiziert.

Die bekannten Silan-modifizierten Füllstoffe haben den Nachteil, daß die dynamischen Eigenschaften nicht besser als die der in-situ gemischten Füllstoffe und Silane sind.

Aufgabe der vorliegenden Erfindung ist es, einen silanmodifizierten oxidischen oder silikatischen Füllstoff herzustellen, der eine homogene Belegung der Oberfläche aufweist und der verbesserte dynamische Eigenschaften in Kautschuk, als in-situ hergestellte Kautschukmischungen besitzt.

Gegenstand der Erfindung ist ein silanmodifizierter oxidischer oder silikatischer Füllstoff, welcher dadurch gekennzeichnet ist, daß mindestens eine gefällte Kieselsäure mit BET-Oberflächen (gemessen mit gasförmigen Stickstoff) von 1 bis 300m²/g mit einem Mercaptosilan der allgemeinen Formel (I)

(R¹)₃Si-R²-SH, I

wobei die Substituenten R¹ gleich oder verschieden sind und aus Alkoxy, vorzugsweise Methoxy, Ethoxy oder Propoxy, oder Alkyl bestehen, wobei mindestens eine Gruppe R¹ eine Alkoxygruppe ist, R² eine zweibindige Kohlenwasserstoffgruppe, vorzugsweise -CH₂-, -CH₂-CH₂-, -CH₂-CH₂-CH₂-, -CH₂-CH(CH₃)-CH₂-, -CH₂-CH₂-CH(CH₃)-, bedeutet, und einem Alkylsilan ausgewählt aus der Gruppe Hexadecyltriethoxysilan, Octadecyltriethoxysilan, Hexadecyltrimethoxysilan oder Octadecyltrimethoxysilan, modifiziert ist.

Der silanmodifizierte oxidische oder silikatische Füllstoff kann zwischen 0,1 und 50,0 Gew.-% , vorzugsweise zwischen 1,0 und 25,0 Gew.-%, besonders bevorzugt zwischen 1,0 und 8,0 Gew.-%, Mercaptosilan und Alkylsilan enthalten.

Die Silane können chemisch oder physikalisch mit der Oberfläche des Füllstoffs verbunden sein.

Ein weiterer Gegenstand der Erfindung ist ein Verfahren zur Herstellung des erfindungsgemäßen silanmodifizierten oxidischen oder silikatischen Füllstoff, welches dadurch gekennzeichnet ist, daß man mindestens eine gefällte Kieselsäure mit BET-Oberflächen (gemessen mit gasförmigem Stickstoff) von 1 bis 300 m²/g mit einem Mercaptosilan der Formel I und einem Alkylsilan, ausgewählt aus der Gruppe Hexadecyltriethoxysilane, Octadecyltriethoxysilan, Hexadecyltrimethoxysilan oder Octadecyltrimethoxysilan, mischt.

Die Umsetzung kann man mit oder ohne Lösungsmittel, beispielsweise Methanol, Ethanol, Pentan, Hexan, Cyclohexan oder Toluol, durchführen.

Die gefällte Kisselsäure kann zuerst mit dem Mercaptosilan und dann mit dem Alkylsilan gemischt werden oder umgekehrt. Das Mercaptosilan und das Alkylsilan können zuerst gemischt werden und anschließend mit der gefällten Kieselsäure gemischt werden.

Das Mercaptosilan und Alkysilan kann man auf die gefällte Kieselsäure aufsprühen. Das Aufsprühen kann vorzugsweise bei 10-50°C durchgeführt werden. Die Umsetzung, das heißt, die Reaktion der Silane mit der Kieselsäure, kann bei Temperaturen von 50° bis 200°C, vorzugsweise 60° bis 160°C, erfolgen. Die Umsetzung bei erhöhter Temperatur kann direkt nach dem Aufsprühen erfolgen (einstufig) oder in getrennten Schritten (zweistufig).

Die Umsetzung kann man zwischen 1 und 200 Minuten, vorzugsweise 1 und 30 Minuten, durchführen

Die gefällte Kieselsäure und das Mercaptosilan und Alkylsilan können kontinuierlich mit einem geeigneten Rühraggregat umgewälzt werden. Dabei kann die Rührgeschwindigkeit der Temperatur angepaßt werden.

Als Rühraggregat können Hubrührer, Blattrührer, Balkenrührer, Lochbalkenrührer, Kreuzbalkenrührer, Ankerrührer, Gitterrührer, Schaufelwalze, Propellerrührer, Schneckenrührer, Turbinenrührer, Scheibenrührer, Planetenrührer, Kreiselmischer oder Impellerrührer verwendet werden.

Das Rühraggregat kann mit 1-200 Umdrehungen, Hubbewegungen oder Umwälzungen pro Minute arbeiten.

Im Anschluß die Oberflächenmodifizierung kann die gefällte Kieselsäure getempert werden. Die Temperaturen können dabei 50° bis 200°C, vorzugsweise 50° bis 160°C, betragen.

Als Mercaptosilan können Verbindungen der allgemeinen Formel (I)

(R¹)₃Si-R²-SH, I

wobei Substituenten R¹ gleich oder verschieden sind und aus Alkoxy, vorzugsweise Methoxy, Ethoxy oder Propoxy, oder Alkyl bestehen, wobei mindestens eine Gruppe R¹ eine Alkoxygruppe ist, R² eine zweibindige Kohlenwasserstoffgruppe, vorzugsweise -CH₂-, -CH₂-CH₂-, -CH₂-CH₂-CH₂-, -CH₂-CH(CH₃)-CH₂-, -CH₂-CH₂-CH(CH₃)-, bedeutet, verwendet werden. Vorzugsweise können als Mercaptosilane Mercaptopropyltrimethoxysilan, Mercaptopropyltriethoxysilan, Mercaptoethyltrimethoxysilan oder Mercaptoethyltriethoxysilan verwendet werden.

Beispielsweise können die von der Degussa AG unter dem Handelsnamen Ultrasil vertriebenen Fällungskieselsäuren (Ultrasil 7000 GR, Ultrasil VN 3, Ultrasil VN 3 GR, Ultrasil VN 2 und Ultrasil VN 2 GR) verwendet werden.

Ein weiterer Gegenstand der Erfindung sind Kautschukmischungen, welche dadurch gekennzeichnet sind, daß sie Kautschuk, den erfindungsgemäßen silanmodifizierten oxidischen oder silikatischen Füllstoff, gegebenenfalls gefällte Kieselsäure und / oder Ruß und / oder weitere Kautschukhilfsmittel enthalten.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem
Polybutadien (BR),
Polyisopren (IR),
Styrol/Butadien-Copolymerisate mit Styrolgehalten von 1 bis 60, vorzugsweise 5 bis 50 Gew.-% (E- oder S-SBR),
Isobutylen/Isopren-Copolymerisate (IIR),
Butadien/Acrylnitril-Copolymere mit Acrylnitrilgehalten von 5 bis 60, vorzugsweise 10 bis 50 Gew. -% (NBR),
Ethylen/Propylen/Dien-Copolymerisate (EPDM),
sowie Mischungen dieser Kautschuke.

Die erfindungsgemäßen Kautschukmischungen können weitere Kautschukhilfsprodukte wie unter anderem Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol, Hexantriol enthalten.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-%, bezogen auf Kautschuk.

Als Vernetzer können Schwefel, organische Schwefelspender oder Radikalbildner eingesetzt werden. Die erfindungsgemäßen Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Vernetzer können in Mengen von 0,1 bis 10 Gew.-%, bevorzugt 0,1 bis 5 Gew.-%, bezogen auf Kautschuk, eingesetzt werden.

Die Abmischung der Kautschuke mit dem Füllstoff, gegebenenfalls Kautschukhilfsmitteln und der Organosilane kann in üblichen Mischaggregaten, wie Walzen, Innenmischern und Mischextrudern, durchgeführt werden. Üblicherweise werden solche Kautschukmischungen im Innenmischern hergestellt, wobei zunächst in einer oder mehreren aufeinanderfolgenden thermomechanischen Mischstufen die Kautschuke, der erfindungsgemäße silanmodifizierte oxidische oder silikatische Füllstoff, gegebenenfalls der Ruß und/oder die Kieselsäure und/oder weitere Kautschukhilfsmittel bei Temperaturen von 100 bis 170°C eingemischt werden. Dabei kann sich die Zugabereihenfolge und der Zugabezeitpunkt der Einzelkomponenten entscheidend auf die erhaltenen Mischungseigenschaften auswirken. Die so erhaltene Kautschukmischung wird dann üblicherweise in einem Innenmischer oder auf einer Walze bei 40-110°C mit den Vernetzungschemikalien versetzt und zur sogenannten Rohmischung für die nachfolgenden Prozeßschritte, wie zum Beispiel Formgebung und Vulkanisation, verarbeitet.

Die Vulkanisation der erfindungsgemäßen Kautschukmischungen kann bei Temperaturen von 80 bis 200°C, bevorzugt von 130 bis 180°C, gegebenenfalls unter Druck von 10 bis 200 bar erfolgen.

Die erfindungsgemäßen Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhschlen, Dichtungsringen, Profilen und Dämpfungselementen.

Die erfindungsgemäß silanmodifizierten oxidischen oder silikatischen Füllstoffe weisen gegenüber den in-situ Mischungen den Vorteil einer niedrigeren Viskosität, höheren Modul und verbesserten dynamischen Eigenschaften auf.

### Beispiele

### Vergleichsbeispiel 1

### Herstellung des silanmodifizierten oxidischen oder silikatischen Füllstoffes B1

In einem Henschelmischer werden 3000 g Ultrasil 7000 GR vorgelegt. Es wird 74 g Mercaptopropyltrimethoxysilan (VP Si 163) und 112,5 g Octyltriethoxysilan (VP Si 208) nacheinander, bei Temperaturen von 23°C unter Rühren aufgesprüht. Anschließend wird das Material aus dem Henschelmischer entfernt und dieser auf 120°C aufgeheizt. Dann wird die Kieselsäure-Silanabmischung in den heißen Mischer gefüllt und unter Rühren 30 Minuten bei 120°C ausreagiert.

### Vergleichsheispiel 2

### Herstellung des silanmodifizierten oxidischen oder silikatischen Füllstoffes B2

In einem Henschelmischer werden 3000 g Ultrasil 7000 GR vorgelegt. Es werden 74g Mercaptopropyltrimethoxysilan (VP Si 163) und 112,5 g Octyltriethoxysilan (VP Si 208) in 400 g Ethanol gelöst. Die Silanlösung wird bei Temperaturen von 23°C auf das Ultrasil 7000 GR unter Rühren aufgesprüht. Anschließend wird das Material aus dem Henschelmischer entfernt und dieser auf 120°C aufgeheizt. Dann wird die Kieselsäure-Silanabmischung in den heißen Mischer gefüllt und unter Rühren 30 Minuten bei 120°C ausreagiert.

### Beispiel 3

### Gummitechnische Untersuchung der silanmodifizierten oxidischen oder silikatischen Füllstoffe

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1**

| | Mischung 1 Referenz | Mischung 2 Referenz | Mischung 3 Referenz |
|---|---|---|---|
| 1.Stufe | | | |
| Buna VSL 5025-1 | 96 | 96 | 96 |
| Buna CB 24 | 30 | 30 | 30 |
| Ultrasil 7000 GR | 80 | - | - |
| Beispiel B1 | - | 82 | - |
| Beispiel B2 | - | - | 82 |
| VP Si 163 | 1,98 | - | - |
| VP Si 208 | 2,5 | - | - |
| ZnO | 3 | 3 | 3 |
| Stearinsäure | 2 | 2 | 2 |
| Naftolen | 10 | 10 | 10 |
| Vulkanox 4020 | 1,5 | 1,5 | 1,5 |
| Protektor G35P | 1 | 1 | 1 |

| 2.Stufe | | | |
|---|---|---|---|
| Batch Stufe 1 | | | |

| 3.Stufe | | | |
|---|---|---|---|
| Batch Stufe 2 | | | |
| Vulkacit D | 2 | 2 | 2 |
| Vulkazit CZ | 1,5 | 1,5 | 1,5 |
| Schwefel | 2,3 | 2,3 | 2,3 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4-Polybutadien (Neodymtyp) der Bayer AG mit cis 1,4-Gehalt von mindestens 97 %, einem 1,2-Gehalt von 1 % und einer Mooney-Viskosität von 44 ±5.

Als aromatisches Öl wird Naftolen ZD der Chemetall verwendet. Bei Vulkanox 4020 handelt es sich um 6PPD der Bayer AG und Protektor G35P ist ein Ozonschutzwachs der HB-Fuller GmbH. Vulkacit D (DPG) und Vulkazit CZ (CBS) sind Handelsprodukte der Bayer AG.

Ultrasil 7000 GR ist eine gut dispergierbare gefällte Kieselsäure der Degussa AG mit einer BET Oberfläche von 170 m²/g. VP Si 163, Mercaptopropyltrimethoxysilan und VP Si 208, Octyltriethoxysilan sind Handelsprodukte der Degussa AG.

Die Kautschukmischungen werden in einem Innenmischer entsprechend der Mischvorschrift in Tabelle 2 hergestellt.

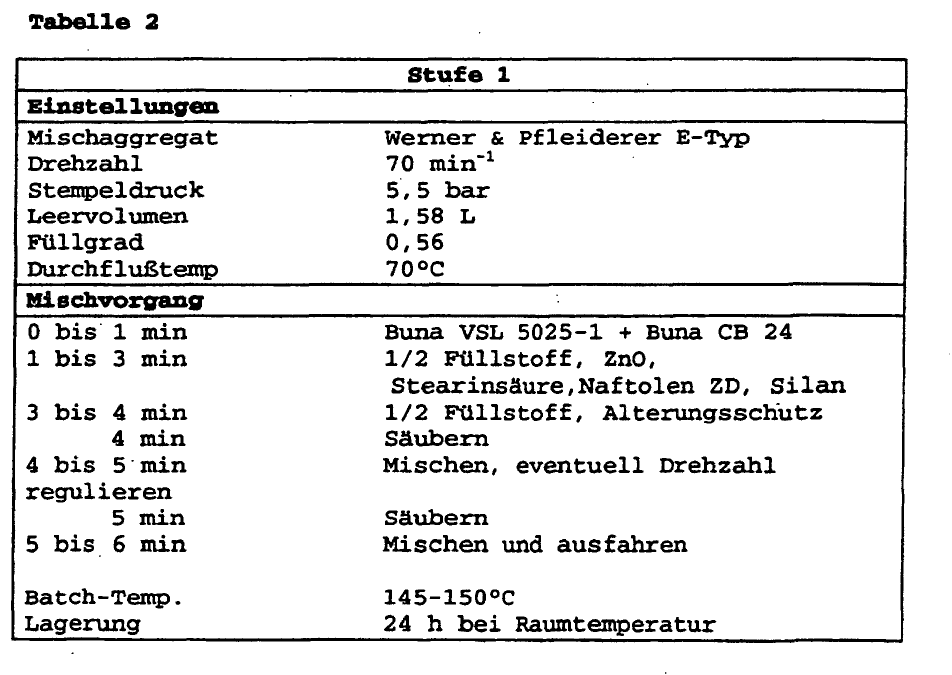

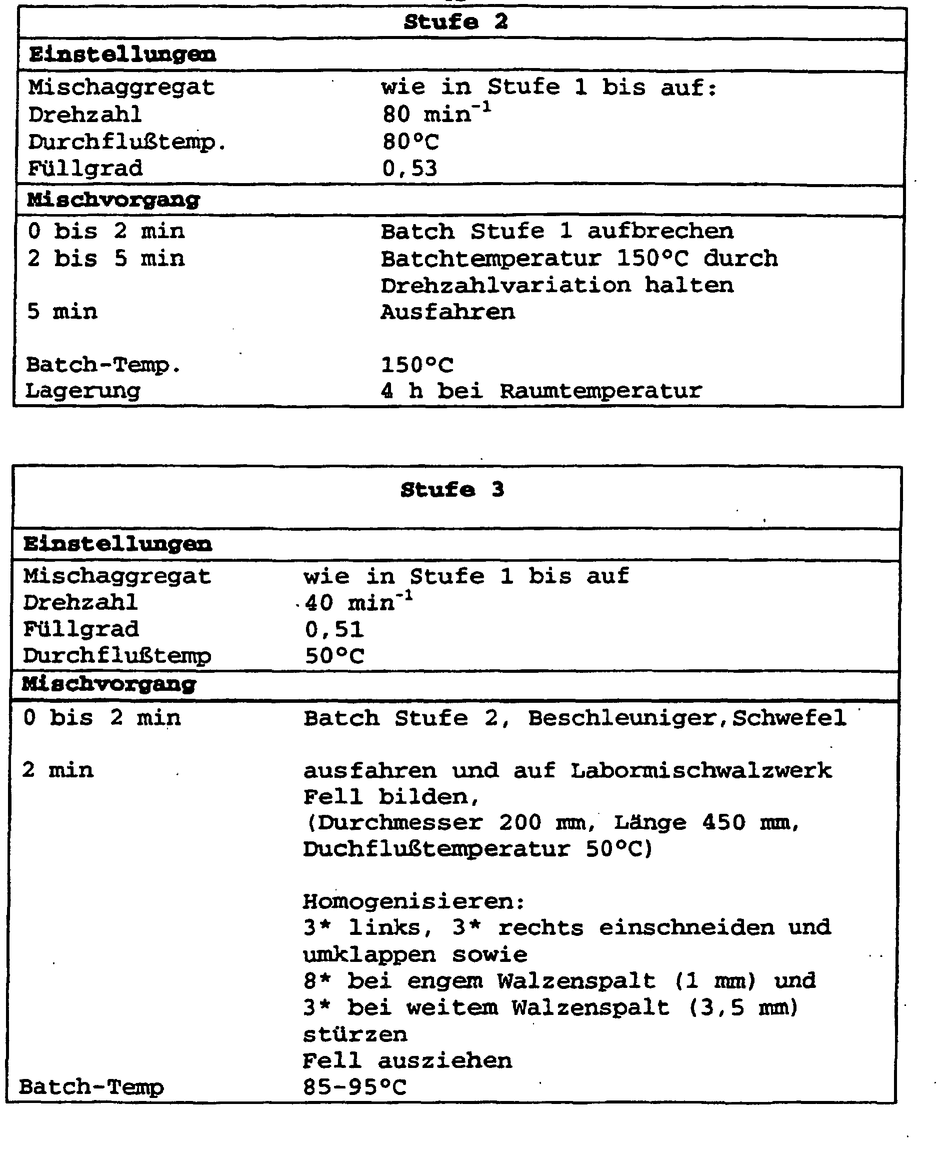

In Tabelle 3 sind die Methoden für die Gummitestung zusammengestellt.

**Tabelle 3**

| Physikalische Testung | Norm/Bedingungen |
|---|---|
| ML 1+4, 100°C, 3. Stufe | DIN 53523/3, ISO 667 |
| Vulkameterprüfung, 165°C | DIN 53529/3, ISO 6502 |
| Dmax-Dmin (dNm) | |
| t10% und t90% (min) | |
| t80% - t20% (min) | |
| Zugversuch am Ring, 23°C | DIN 53504, ISO 37 |
| Zugfestigkeit (MPa) | |
| Spannungswerte (MPa) | |
| Bruchdehnung (%) | |
| Shore-A-Härte, 23°C (SH) | DIN 53 505 |
| Viskoelastische Eigenschaften MTS, 0 bis 60°C, 16 Hz, 50 N Vorkraft und 25 N Amplitudenkraft | DIN 53 513, ISO 2856 |
| | |
| Komplexer Modul E* (MPa) | |
| Verlustsmodul E'' (MPa) | |
| Verlustfaktor tan δ () | |
| Ball Rebound, 23°C (%) | ASTM D 5308 |
| DIN-Abrieb, 10 N Kraft (mm³) | DIN 53 516 |
| Dispersion ( ) (Phillips) | ISO/DIS 11345 |
| Goodrich Flexometer 0,250 inch, 25 min, 23 °C | DIN 53533; ASTM D 623 A |
| Kontakttemperatur (°C) | |
| Einstichtemperatur (°C) | |
| Permanent Set (%) | |

Tabelle 4 zeigt die Ergebnisse der gummitechnischen Prüfung. Die Mischungen werden 20 min bei 165°C vulkanisiert.

**Tabelle 4**

| **Rohmischungsergebnisse** | | in-situ Referenz | Referenz | Referenz |
|---|---|---|---|---|
| Merkmal | Einheit: | 1 | 2 | 3 |
| Batchtemperatur 1. Stufe | [°C] | 145 | 143 | 151 |
| Batchtemperatur 2. Stufe | [°C] | 145 | 146 | 145 |
| ML(1+4) bei 100°C, 1. Stufe | [ME] | 140 | 120 | 111 |
| ML(1+4) bei 100°C, 2. Stufe | [ME] | 74 | 79 | 78 |
| ML(1+4) bei 100°C, 3. Stufe | [ME] | 58 | 62 | 67 |

| **MDR, 165°C** | | | | |
|---|---|---|---|---|
| Dmax-Dmin | [dNm] | 12,6 | 14,7 | 14,2 |
| t 10 % | [min] | 1,0 | 0,8 | 0,9 |
| t 90 % | [min] | 13,8 | 7,2 | 6,6 |
| t 80 % - t 20 % | [min] | 6,0 | 2,8 | 2,7 |
| | | | | |

| **Vulkanisatergebnisse** | | | | |
|---|---|---|---|---|
| Merkmal: | Einheit: | 1 | 2 | 3 |
| **Zugversuch am Ring** | | | | |
| Zugfestigkeit | [MPa] | 14,2 | 14,3 | 13,9 |
| Spannungswert 100 % | [MPa] | 1,4 | 1,8 | 1,9 |
| Spannungswert 300 % | [MPa] | 8,7 | 10,7 | 11,8 |
| Spannungswert 300 %/100 % | [-] | 6,2 | 5,9 | 6,2 |
| Bruchdehnung | [%] | 390 | 360 | 330 |
| Bruchenergie | [J] | 66,1 | 63,4 | 56,2 |
| Shore-A-Härte | [SH] | 55 | 59 | 59 |
| Ball-Rebound, 23°C | [%] | 38,1 | 34,8 | 33,9 |
| DIN-Abrieb | [mm³] | 72 | 76 | 67 |

| **Goodrich-Flexometer** **Hub: 0,250 inch; 25 min; 23°C** | | | | |
|---|---|---|---|---|
| Kontakttemperatur | [°C] | 57 | 58 | 58 |
| Einstichtemperatur | [°C] | 99 | 100 | 100 |
| Permanent Set | [%] | 3,6 | 3,2 | 3,0 |

| **MTS** | | | | |
|---|---|---|---|---|
| Komplexer Modul E*, 0°C | [MPa] | 11,5 | 15,1 | 15,9 |
| Komplexer Modul E* 60°C | [MPa] | 6,1 | 7,2 | 7,2 |
| Verlustmodul E", 0°C | [MPa] | 4,3 | 6,1 | 6,6 |
| Verlustmodul E", 60°C | [MPa] | 0,5 | 0,6 | 0,6 |
| Verlustfaktor tan δ, 0°C | [-] | 0,404 | 0,439 | 0,458 |
| Verlustfaktor tan δ, 60°C | [-] | 0,081 | 0,078 | 0,081 |
| **Dispersion Phillips** | [-] | 8 | 7 | 7 |

Wie man anhand der Daten in Tabelle 4 erkennen kann, liegt das Gummiwertebild der Mischung (2+3) mit den silanmodifizierten oxidischen oder silikatischen Füllstoffen über dem der in-situ Referenz (1). Unter anderem belegen die niedrigere Mooney-Viskosität, die höheren Spannungswerte und der niedrigere tan 8 (60°C) Wert eine Verbesserung gegenüber der in-situ Mischung.

### Referenz beispiel 4

### Herstellung des silanmodifizierten oxidischen oder silikatischen Füllstoffes B3.

In einem Henschelmischer werden 3000 g Ultrasil 7000 GR vorgelegt. Unter Rühren werden nacheinander 150 g DOW 50 (Silikonöl mit Mₙ=3700 g/mol) und 90 g Dynasylan 3201 (Mercaptopropyltriethoxysilan) bei 22°C aufgesprüht. Das Material wird dann aus dem Henschelmischer entfernt und dieser anschließend auf 120°C erhitzt. Nachfolgend wird der Henschelmischer mit der Kieselsäure/Silan-Abmischung befüllt und unter Rühren 30 Minuten bei 120°C die Silankopplungsreaktion durchgeführt.

### Beispiel 5

### Herstellung des silanmodifizierten oxidischen oder silikatischen Füllstoffes B4.

In einem Henschelmischer werden 3000 g Ultrasil 7000 GR vorgelegt. Unter Rühren werden nacheinander 60 g VP Si 216 (Hexadecyltriethoxysilan) und 90 g Dynasylan 3201 bei 22°C aufgesprüht. Das Material wird dann aus dem Henschelmischer entfernt und dieser anschließend auf 120°C erhitzt. Nachfolgend wird der Henschelmischer mit der Kieselsäure/Silan-Abmischung befüllt und unter Rühren 30 Minuten bei 120°C die Silankopplungsreaktion durchgeführt.

### Beispiel 6

### Herstellung des silanmodifizierten oxidischen oder silikatischen Füllstoffes B5.

In einem Henschelmischer werden 3000 g Ultrasil 7000 GR vorgelegt. Unter Rühren werden 60 g VP Si 216 bei 22°C aufgesprüht. Das Material wird dann aus dem Henschelmischer entfernt und dieser anschließend auf 120°C erhitzt. Nachfolgend wird der Henschelmischer mit der Kieselsäure/Silan-Abmischung befüllt und unter Rühren 30 Minuten bei 120°C die Silankopplungsreaktion durchgeführt.

In einem 2. Schritt wird das erhaltene Produkt im Henschelmischer vorgelegt und unter Rühren bei 22°C 90 g Dynasylan 3201 aufgesprüht. Das Material wird dann aus dem Henschelmischer entfernt und dieser anschließend auf 120°C erhitzt. Nachfolgend wird der Henschelmischer mit der Kieselsäure/Silan-Abmischung befüllt und unter Rühren 30 Minuten bei 120°C die Silankopplungsreaktion durchgeführt.

### Beispiel 7

### Gummitechnische Untersuchung der silanmodifizierten oxidischen oder silikatischen Füllstoffe.

Die für die Kautschukmischungen verwendete Rezeptur ist in der folgenden Tabelle 5 angegeben. Dabei bedeutet die Einheit phr Gewichtsanteile, bezogen auf 100 Teile des eingesetzten Rohkautschuks.

**Tabelle 5**

| | Mischung 4 Referenz | Mischung 5 Referenz | Mischung 6 Referenz | Mischung 7 Referenz | Mischung 8 Referenz | Mischung 9 | Mischung 10 |
|---|---|---|---|---|---|---|---|
| 1. Stufe | | | | | | | |
| Buna VSL 5025-1 | 96 | 96 | 96 | 96 | 96 | 96 | 96 |
| Buna CB 24 | 30 | 30 | 30 | 30 | 30 | 30 | 30 |
| Ultrasil 7000 GR | 80 | 80 | 80 | - | - | - | - |
| Coupsil 8108 | - | - | - | 86 | - | - | - |
| Beispiel B3 | - | - | - | - | 86 | - | - |
| Beispiel B4 | - | - | - | - | - | 83,4 | - |
| Beispiel B5 | - | - | - | - | - | - | 83,4 |
| Dynasylan 3201 | - | 2,4 | 2,4 | - | - | - | - |
| Si 69 | 6,4 | - | - | - | - | - | - |
| Si 216 | - | 1,6 | - | - | - | - | - |
| DOW 50 | - | - | 4 | - | - | - | - |
| ZnO | 3 | 3 | 3 | 3 | 3 | 3 | 3 |
| Stearinsäure | 2 | 2 | 2 | 2 | 2 | 2 | 2 |
| Naftolen | 10 | 10 | 10 | 10 | 10 | 10 | 10 |
| Vulkanox 4020 | 1,5 | 1,5 | 1,5 | 1,5 | 1,5 | 1,5 | 1,5 |
| Protektor G35P | 1 | 1 | 1 | 1 | 1 | 1 | 1 |

| 2.Stufe | | | | | | | |
|---|---|---|---|---|---|---|---|
| Batch Stufe 1 | | | | | | | |

| 3. Stufe | | | | | | | |
|---|---|---|---|---|---|---|---|
| Batch Stufe 2 | | | | | | | |
| Vulkacit D | 2 | 2 | 2 | 2 | 2 | 2 | 2 |
| Vulkazit CZ | 1,5 | 1,5 | 1,5 | 1,5 | 1,5 | 1,5 | 1,5 |
| Schwefel | 1,5 | 2,3 | 2,3 | 1,5 | 2,3 | 2,3 | 2,3 |

Coupsil 8108 GR ist eine mit 8 % Si 69 vorsilanisierte Kieselsäure auf der Basis von Ultrasil VN3 GR der Firma Degussa AG.

Dynasylan 3201, 3-Mercaptopropyltriethoxysilan, VP Si 216, Hexadecyltriethoxysilan und Si 69, Bis (3-[triethoxysilyl]propyl)tetrasulfan sind Handelsprodukte der Degussa AG. DOW 50 ist ein Silikonöl mit Mₙ=3700 g/,mol der Firma DOW Chemicals.

Die Kautschukmischungen werden in einem Innenmischer entsprechend der Mischvorschrift in Tabelle 2 hergestellt.

Die Gummitestung erfolgt gemäß den Methoden in Tabelle 3.

Tabelle 6a und 6b zeigen die Ergebnisse der gummitechnischen Prüfung. Die Mischungen werden 20 min bei 165°C vulkanisiert.

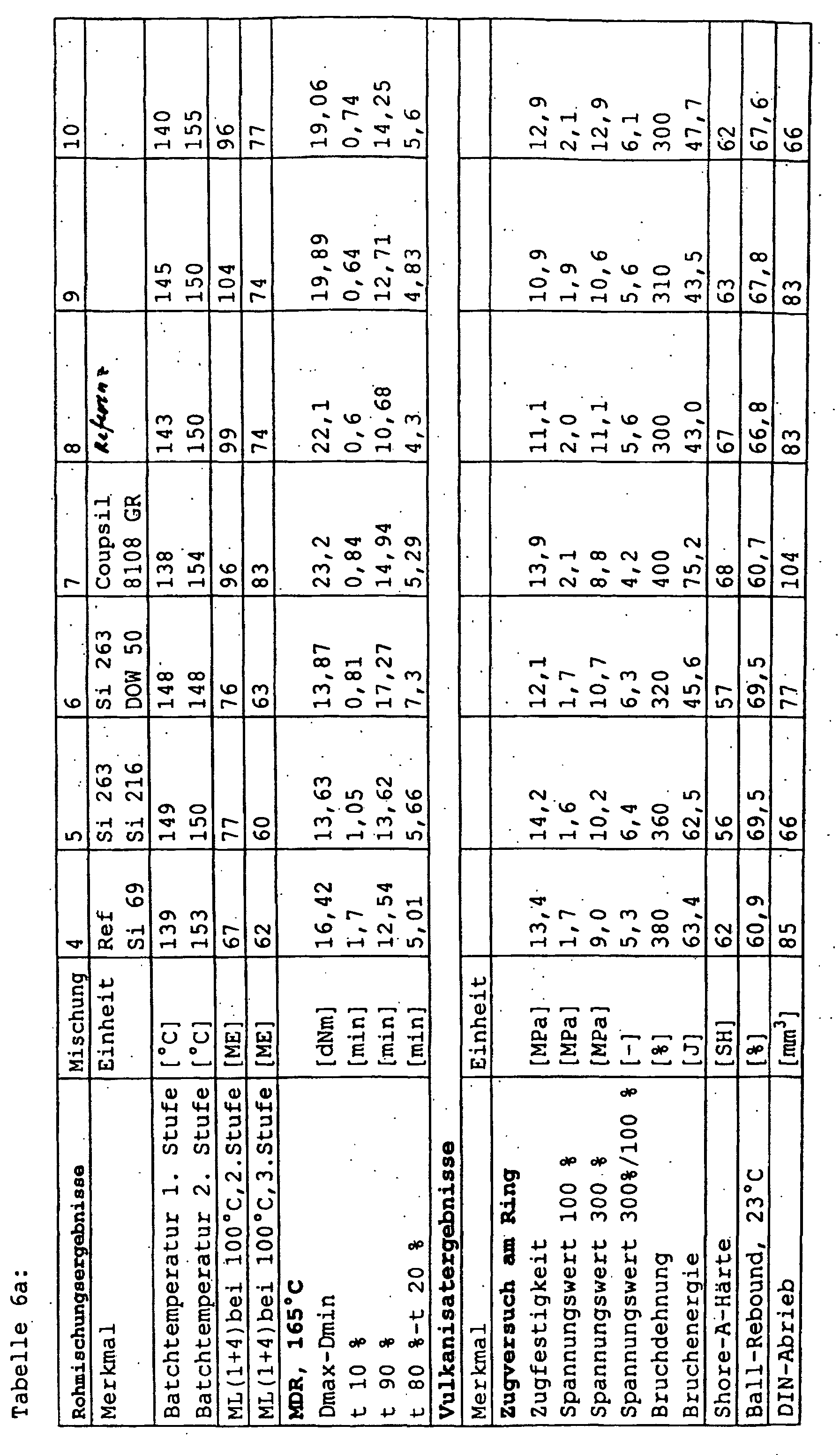

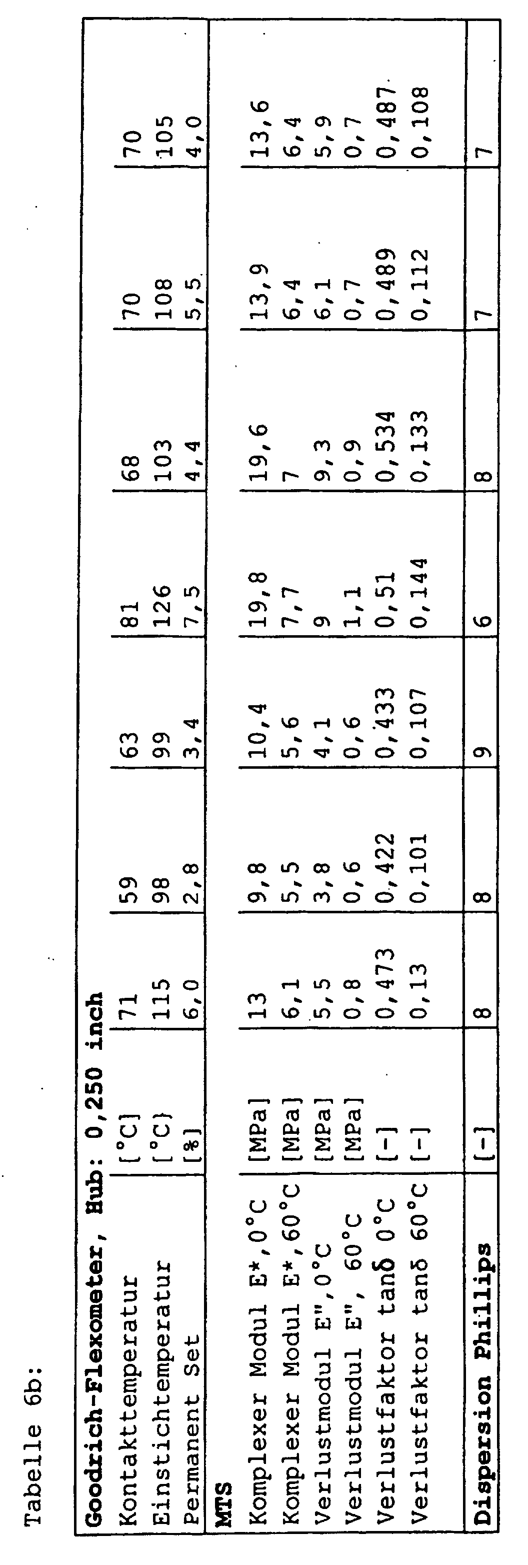

Vergleicht man die Vulkanisatdaten der Mischungen 8-10 der erfindungsgemäßen silanmodifizierten oxidischen oder silikatischen Füllstoffe mit der in-situ Si69 Referenzmischung 4, so sind die Modulwerte und Verstärkungsfaktoren erhöht. Die dynamischen Werte der Mischungen 8-10 sind verbessert (moderate dynamische Steifigkeit und niedriger Hystereseverlust).

## Patentansprüche

1. Silanmodifizierter oxidischer oder silikatischer Füllstoff,
**dadurch gekennzeichnet, daß** mindestens eine gefällte, Kiselsäure mit BET-Oberflächen (gemessen mit gasförmigem Stickstoff) von 1 bis 300 m²/g mit einem Mercaptosilan der allgemeinen Formel (I)
(R¹)₃Si-R²-SH, I
wobei die Substituenten R¹ gleich oder verschieden sind und aus Alkoxy oder Alkyl bestehen, wobei mindestens eine Gruppe R¹ eine Alkoxygruppe ist, R² eine zweibindige Kohlenwasserstoffgruppe bedeutet, und einem Alkylsilan, ausgewählt aus der Gruppe Hexadecyltriethoxysilan, Octadecyltriethoxysilan, Hexadecyltrimethoxysilan oder Octadecyltrimethoxysilan, modifiziert ist.

2. Silanmodifizierter oxidischer oder silikatischer Füllstoff nach Anspruch 1, **dadurch gekennzeichnet, daß** dieser zwischen 0,1 und 50,0 Gew.-% Mercaptosilan und Alkylsilan enthält.

3. Verfahren zur Herstellung des silanmodifizierten, oxidischen oder silikatischen Füllstoffs nach Anspruch 1, **dadurch gekennzeichnet**, däß man mindestens eine gefällte Kieselsäure mit BET-Oberflächen (gemessen mit gasförmigem Stickstoff) von 1 bis 300m²/g mit einem Mercaptosilan der Formel I und einem Alkylsilan, ausgewählt aus der Gruppe Hexadecyltriethoxysilan, Octadecyltrimethoxysilan, Hexadecyltrimethoxysilan oder Octadecyltrimethoxysilan, mischt.

4. Verfahren zur Herstellung des silanmodifizierten, oxidischen oder silikatischen Füllstoffs nach Anspruch 3, **dadurch gekennzeichnet, daß** man die Umsetzung ohne Lösungsmittel durchführt.

5. Verfahren zur Herstellung des silanmodifizierten, oxidischen oder silikatischen Füllstoffs nach Anspruch 3, **dadurch gekennzeichnet, daß** man die Umsetzung in einem Lösungsmittel durchführt.

6. Verfahren zur Herstellung des silanmodifizierten, oxidischen oder silikatischen Füllstoffs nach Anspruch 3, **dadurch gekennzeichnet, daß** man eine Temperatur zwischen 0 und 200°C einhält.

7. Kautschukmischungen, **dadurch gekennzeichnet, daß** sie Kautschuk, den erfindungsgemäßen silanmodifizierten oxidischen oder silikatischen Füllstoff nach Anspruch 1, gegebenenfalls gefällte Kieselsäure und/oder Ruß und/oder weitere Kautschukhilfsmittel enthalten.

8. Verwendung der Kautschukmischungen nach Anspruch 7 zur Herstellung von Formkörpern.

## Claims

1. Silane-modified oxidic or silicate-like filler, **characterised in that** at least one precipitated silica having BET surface areas (measured using gaseous nitrogen) of from 1 to 300 m²/g has been modified with a mercaptosilane of the general formula (I)
(R¹)₃Si-R²-SH I,
wherein the substituents R¹ are identical or different and consist of alkoxy or alkyl, with at least one R¹ group being an alkoxy group, and R² is a divalent hydrocarbon group,
and an alkylsilane chosen from the group hexadecyltriethoxysilane, octadecyltriethoxysilane, hexadecyltrimethoxysilane or octadecyltrimethoxysilane.

2. Silane-modified oxidic or silicate-like filler according to claim 1, **characterised in that** it contains from 0.1 to 50.0 wt.% mercaptosilane and alkylsilane.

3. Process for the preparation of the silane-modified oxidic or silicate-like filler according to claim 1, **characterised in that** at least one precipitated silica having BET surface areas (measured using gaseous nitrogen) of from 1 to 300 m²/g is mixed with a mercaptosilane of formula I and an alkylsilane chosen from the group hexadecyltriethoxysilane, octadecyltriethoxysilane, hexadecyltrimethoxysilane or octadecyltrimethoxysilane.

4. Process for the preparation of the silane-modified oxidic or silicate-like filler according to claim 3, **characterised in that** the reaction is carried out without solvents.

5. Process for the preparation of the silane-modified oxidic or silicate-like filler according to claim 3, **characterised in that** the reaction is carried out in a solvent.

6. Process for the preparation of the silane-modified oxidic or silicate-like filler according to claim 3, **characterised in that** a temperature of between 0 and 200°C is maintained.

7. Rubber mixtures, **characterised in that** they contain rubber, the silane-modified oxidic or silicate-like filler according to the invention according to claim 1, optionally precipitated silica and/or carbon black and/or further rubber auxiliaries.

8. Use of the rubber mixtures according to claim 7 in the production of moulded bodies.

## Revendications

1. Charge de type oxyde ou silicate modifiée par un silane,
**caractérisée en ce qu'**
au moins un acide silicique précipité ayant une surface BET (mesurée avec de l'azote gazeux) de 1 à 300 m²/g est modifié
- avec un mercaptosilane de formule générale (I)
(R¹)₃Si-R²-SH I
dans laquelle les substituants R¹ sont identiques ou différents et sont choisis parmi les groupes alcoxy, ou alkyle, au moins un groupe R¹ étant un groupe alcoxy, R² est un groupe hydrocarboné bivalent, et
- avec un akylsilane choisi dans le groupe constitué par l'hexadécyl triéthoxysilane, l'octadécyl-triéthoxysilane, l'hexadécyl-tri-méthoxysilane ou l'octadécyl-triméthoxysilane.

2. Charge de type oxyde ou silicate modifiée par un silane selon la revendication 1,
**caractérisée en ce qu'**
elle contient entre 0,1 et 50,0 % en poids de mercaptosilane et d'alkylsilane.

3. Procédé de production de la charge de type oxyde ou silicate modifiée par un silane selon la revendication 1,
**caractérisé en ce qu'**
on mélange au moins un acide silicique précipité ayant une surface BET (mesurée avec de l'azote gazeux) de 1 à 300 m²/g avec un mercaptosilane de formule (I) et un alkylsilane choisi dans le groupe formé par l'hexadécyl-triéthoxysilane, l'octadécyl-triéthoxysilane, l'hexadécyl-tri méthoxysilane ou l'octadécyl-triméthoxysilane.

4. Procédé de production d'une charge de type oxyde ou silicate modifiée par un silane selon la revendication 3,
**caractérisé en ce qu'**
on conduit la réaction sans solvant.

5. Procédé de production d'une charge de type oxyde ou silicate modifiée par un silane selon la revendication 3,
**caractérisé en ce qu'**
on conduit la réaction dans un solvant.

6. Procédé de production d'une charge de type oxyde ou silicate modifiée par un silane selon la revendication 3,
**caractérisé en ce qu'**
on maintient une température comprise entre 0 et 200°C.

7. Mélanges de caoutchoucs,
**caractérisés en ce qu'**
ils contiennent du caoutchouc, la charge de type oxyde ou silicate modifiée par un silane de l'invention selon la revendication 1, le cas échéant de l'acide précipité et/ou du noir de fumée, et/ou d'autres adjuvants de caoutchouc.

8. Utilisation des mélanges de caoutchoucs selon la revendication 7, pour la fabrication d'articles moulés.
